# EUROPÄISCHE PATENTSCHRIFT

(11) **EP 0 432 699 B1**
(45) Veröffentlichungstag und Bekanntmachung des Hinweises auf die Patenterteilung: **16.02.1994**
(21) Anmeldenummer: 90123711.5
(22) Anmeldetag: 10.12.1990
(51) Int. Cl.: C23C 30/00, C23C 28/00, C04B 35/80

(54) **Bauteil aus Metall mit einem Schutz gegen Titanfeuer und Verfahren zur Herstellung des Bauteils**
Metal article protected against burning titanium and method of making the same
Elément métallique de construction protégé contre le titane incandescent et son procédé de fabrication

(30) Priorität: 12.12.1989 DE 3940914
(43) Veröffentlichungstag der Anmeldung: 19.06.1991
(73) Patentinhaber: MTU MOTOREN- UND TURBINEN-UNION MÜNCHEN GMBH, D-80976 München (DE)
(72) Erfinder: Uihlein, Thomas, Dr., W-8047 Karlsfeld (DE); Wydra, Gerhard, W-8042 Oberschleissheim (DE)

(56) Entgegenhaltungen:
- EP-A- 0 118 249
- EP-A- 0 227 019
- EP-A- 0 276 913
- DE-A- 3 926 151

## Beschreibung

Die Erfindung betrifft ein Bauteil aus Metall mit einem Schutz gegen Titanfeuer aus Keramikfasern und einem Matrixwerkstoff.

Die Selbstentzündung von Titan bei Temperaturen über 500°C in oxidierender Atmosphäre gefährdet und beeinträchtigt die Einsatzmöglichkeit dieses Werkstoffs für höhere Betriebstemperaturen. Aus der deutschen Patentschrift Nr. 39 06 187 ist eine kompakte Beschichtung titanfeuergefährdeter Bauteile bekannt, die eine Eindämmung von Titanfeuer bewirkt. Der Nachteil derartiger Beschichtungen ist die begrenzte Beschichtungsdicke, die bei hoher Titanfeuerbelastung von glühenden Titanschmelztropfen hoher kinetischer Energie durchschlagen wird und das Metallbauteil an diesen Stellen dem oxidierenden Angriff aussetzt. Andererseits haben diese Schichten aufgrund ihrer Kompaktheit ein hohes spezifisches Gewicht und eine geringe Wärmedämmung.

Aus der Druckschrift DE-AS 19 47 904 ist ein Faserverbundwerkstoff aus Aluminiumsilikatfasern mit Siliciumdioxidmatrix mit Aluminium oder Siliciumteilchen und vorzugsweise einem Füllstoff aus Koks oder Aluminiumdioxid und ein Verfahren zu seiner Herstellung bekannt.

Dieser Faserverbundwerkstoff hat den Nachteil, daß die Fasern in ihrer Struktur durch die dort offenbarte Herstellung aus wässrigem Schlamm ungeordnet und zufallsverteilt vorliegen. Unvermeidliche örtliche Anreicherungen oder Verarmungen von Fasern führen nachteilig zu Inhomogenitäten im Faserverbundwerkstoff und schwächen nachteilig dessen Schutzwirkung. Die aus Kieselsäure gewonnene Siliciumdioxidmatrix hat darüber hinaus den Nachteil einer Hochtemperaturversprödung durch Christobalitbildung und ist für Dauerbelastungen im Heißgasstrom beispielsweise eines Gasturbinentriebwerks ungeeignet.

Aufgabe der Erfindung ist es, ein gattungsgemäßes Bauteil und ein Verfahren zu seiner Herstellung anzugeben, damit Titanfeuer das glühende Titanschmelztropfen hoher kinetischer Energie aufweist, wirksam eingedämmt werden kann und die Bauteiloberflächen vor Hitze und vor Titanschmelzangriff geschützt sind.

Gelöst wird diese Aufgabe dadurch, daß die Keramikfasern als Gelege oder Gewebe angeordnet sind und aus SiO₂, Al₂O₃, ZrO₂ oder aus Mischungen davon bestehen und der Matrixwerkstoff Silikate mit eingelagertem Aluminiumpulver aufweist.

Der Vorteil dieses Bauteils ist, daß die kinetische Energie der Titanschmelztropfen durch die Faser-Matrix-Struktur der Schutzschicht aufgenommen und die Wärmeenergie der Titanschmelze durch Anschmelzen des in der Matrix des Schutzes eingelagerten Aluminumpulvers verbraucht wird. Ferner wird ein Überhitzen der zu schützenden Oberfläche des Bauteils durch die hohen Wärmedämmeigenschaften der Keramikfas ern in einer Silikatmatrix vermieden. Da der Schutz gegen Titanfeuer Keramikfasern als Gelege oder Gewebe aufweist, wird vorteilhaft ein gleichmäßig verteiltes Fasernetz verwirklicht, das keine Faserinhomogenitäten und gegenüber bisher bekannten Faseranordnungen eine höhere Erosionsbeständigkeit zeigt.

Wird vorzugsweise zur Bildung der Matrix ein anorganischer Hochtemperaturlack eingesetzt, so hat das den Vorteil, daß derartige Hochtemperaturlacke gleichzeitig eine klebende Haftung der Schutzmatte auf dem zu schützenden Metallbauteil bewirken, so daß eine partielle Befestigung der Keramikfasern am zu schützenden Bauteil durch beispielsweise Aufsintern oder Einlöten oder Eingießen entfällt.

Die erfindungsgemäßen Bauteile werden vorzugsweise im Gasturbinenbau für Flugtriebwerke eingesetzt, so daß eine bevorzugte Ausbildung der Erfindung eine Dichte der Schutzmatte zwischen 0,8 bis 2,0 g/cm³ vorsieht. Diese niedrige Dichte hat den Vorteil, daß ohne Gewichtszunahme ein relativ dicker Schutz im Vergleich zu kompakten Schutzschichten einsetzbar wird, so daß die kinetische Energie von Titanschmelztröpfchen durch den Schutz aufgenommen werden kann.

Eine weitere Ausbildung der Erfindung weist einen Schutz mit einer Dicke zwischen 0,5 und 20 mm vorzugsweise 1 bis 10 mm auf, wobei der bevorzugte Bereich den größten Teil der Schutzmatte abdeckt, während der erweiterte Bereich vorteilhaft auch extrem dünne und relativ dicke Schutzschichten zuläßt, wobei der dünne Bereich von 0,5 bis 1 mm in Konkurrenz zu kompakten Schutzschichten tritt mit dem Vorteil der Durchdringung dieser Schichten mit wärmeisolierenden Keramikfasern. Der dicke Bereich von 10 bis 20 mm weist auf Ausbildungsmöglichkeiten des Titanfeuerschutzes hin, die bisher nicht realisiert werden konnten.

Durch Versiegeln der Oberfläche der Schutzschicht wird vorteilhaft ein porenfreier, gasdichter Abschluß für das Bauteil mit Schutz gegen Titanfeuer erreicht, so daß eine Aufblähung und Durchströmung des Gewebes von einem oxidierenden Gasstrom verhindert wird.

Das Verfahren zur Herstellung eines Bauteils mit Schutz gegen Titanfeuer hat folgende Verfahrensschritte:
a) Trocknen und Glühen der Keramikfasern eines Keramikfaserwerk stoffs in Form von Gelegen oder Gewebe,
b) Infiltrieren des Keramikfaserwerkstoffes mit Silikaten,
c) Aufbringen von anorganischem Hochtemperaturlack aus Silikatbinder und Aluminiumpulver als Aluminiumfüllstoff auf die Bauteiloberfläche und auf die Keramikfasern,
d) Trocknen und Einbrennen des Hochtemperaturlacks,
e) Versiegeln der Oberfläche der Schutzschicht mittels Silikaten.

Der Vorteil des Verfahrens ist, daß es mit handelsüblichen Mitteln preiswert einem wirksamen Schutz gegen Titanfeuer liefert, der gleichzeitig die thermische Belastung des Bauteils aufgrund der Wärmeisolation der Keramikfasern und der Silikate absenkt.

Durch Trocknen und Glühen der Keramikfasern eines Keramikwerkstoffs in Form von Gelege oder Geweben wird das Fasermaterial gereinigt, so daß bei der nachfolgenden Infiltration des Keramikfaserwerkstoffs mit Silikaten, diese die Faseroberflächen vollständig benetzen. Als Silikate können vorzugsweise Alkyl-, Natrium-, Kalium-, Aluminium-, Zinksilikate oder Mischungen aus mehreren dieser Silikate eingesetzt werden.

Das Aufbringen von anorganischem Hochtemperaturlack mit Aluminiumfüllstoff auf die Bauteiloberfläche dient der verbesserten Haftung der Schutzschicht auf dem Bauteil. Nach Auflegen des infiltrierten Faserwerkstoffs auf die lackierte Bauteiloberfläche wird die Oberfläche des Faserwerkstoffs mit anorgaischem Hochtemperaturlack bestrichen, gespritzt oder besprüht, so daß im anschließenden Trocknungs- und Einbrennschritt eine Schutzschicht auf dem Bauteil gebildet wird, die aus Keramikfasern aus SiO₂, Al₂O₃, ZrO₂ oder Mischungen davon besteht und deren Matrixwerkstoff Silikate mit eingelagertem Aluminiumpulver aufweist.

Die häufig porige, wellige und unebene Oberfläche der Schutzschicht wird anschließend mit Silikaten derart versiegelt, daß sie gasdicht und glatt wird.

Zur Herstellung dicker Wandstärken der Schutzschicht kann auf die unversiegelte Oberfläche erneut oder auch mehrfach Faserwerkstoff und anorganischer Hochtemperaturlack aufgebracht werden, so daß Schutzschichten bis zu einer Dicke von 20 mm herstellbar werden.

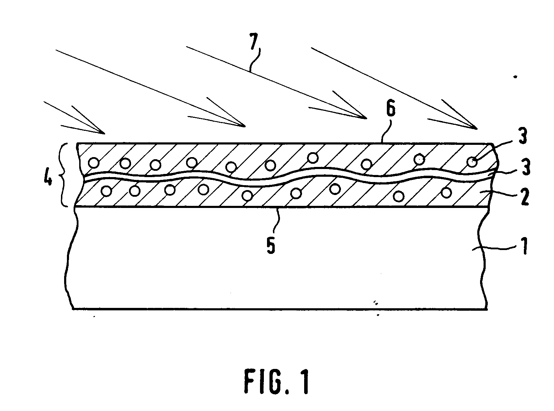

Die nachfolgende Figur 1 und ein Ausführungsbeispiel mit Herstellungsverfahren sollen die Erfindung erläutern.
- Fig. 1: zeigt den Aufbau des Bauteils aus Metall mit einem Schutz gegen Titanfeuer.

Fig. 1 zeigt den Aufbau eines Bauteils 1 aus Metall, beispielsweise Titan, mit einer Schutzschicht 4, die fest auf der Oberfläche 5 des Bauteils haftet. Diese Haftung wird von einem anorganischen Hochtemperaturlack bewirkt, der mit Silikaten als Binder und Aluminiumpulver als Füllstoff den Matrixwerkstoff 2 der Schutzschicht 4 gegen Titanfeuer bildet. Dieser Matrixwerkstoff 2 wird von Keramikfasern 3 aus SiO₂/Al₂O₃ in beispielsweise 3 Lagen durchzogen, wobei in Fig. 1 eine längsgeschnittene Faser 3 und mehrere quergeschnittene Fasern 3 der drei Lagen dargestellt werden. Die durch Silikate versiegelte Oberfläche 6 schützt die Schutzmatte vor dem Durchströmen oxidierender Heißgase, die in Pfeilrichtung 7 auf die Oberfläche 6 der Schutzmatte 4 treffen.

Das in Fig. 1 dargestellte Bauteil aus Metall mit Schutz gegen Titanfeuer wurde hergestellt, indem zunächst die Oberfläche des Bauteils gereinigt wurde und ein Silikatbinder auf die Oberfläche aufgebracht wurde. Nach Trocknung des Silkatbinders wurde ein anorganischer Hochtemperaturlack mit Aluminiumpulver als Füllstoff aufgetragen. Die 3 Lagen Faserwerkstoff aus SiO₂/Al₂O₃ wurden zunächst getrocknet und geglüht, so daß die Oberflächen der Fasern vollständig von Verunreinigungen befreit wurden.

Diese drei Faserlagen wurden dann in Silikat getränkt, getrocknet und auf die Bauteiloberfläche in den klebrigen Hochtemperaturlack gelegt und mit Hochtemperaturlack besprüht, der als Füllstoff Aluminiumpulver enthält. Danach wurde der Lack getrocknet und zu einer 1 mm dicken Schutzschicht auf dem Bauteil eingebrannt.

Zum Abschluß wurde auf die Oberfläche der Schutzschicht ein Silikat gesprüht und mit dem Einbrennen des Silikats die Oberfläche des Schutzes gegen Titanfeuer gasdicht versiegelt. Das spezifische Gewicht des Schutzes beträgt bei diesem Beispiel 1,5 g/cm³.

## Patentansprüche

1. Bauteil aus Metall mit einem Schutz gegen Titanfeuer aus Keramikfasern und einem Matrixwerkstoff, dadurch gekennzeichnet, daß die Keramikfasern als Gelege oder Gewebe angeordnet sind und aus SiO₂, Al₂O₃, ZrO₂ oder Mischungen davon bestehen und der Matrixwerkstoff Silikate mit eingelagertem Aluminiumpulver aufweist.

2. Bauteil nach Anspruch 1, dadurch gekennzeichnet, daß der Matrixwerkstoff ein anorganischer Hochtemperaturlack ist.

3. Bauteil nach Anspruch 1 oder 2, dadurch gekennzeichnet, daß der Schutz eine Dichte zwischen 0,8 bis 2,0g/cm³ aufweist.

4. Bauteil nach einem der Ansprüche 1 bis 3, dadurch gekennzeichnet, daß der Schutz eine Dicke zwischen 0,5 und 20 mm vorzugsweise 1 bis 10 mm aufweist.

5. Bauteil nach einem der Ansprüche 1 bis 4, dadurch gekennzeichnet, daß die Oberfläche des Schutzes gasdicht versiegelt ist.

6. Verfahren zur Herstellung eines Bauteils mit Schutz gegen Titanfeuer nach einem der Ansprüche 1 bis 5, das durch folgende Verfahrensschritte gekennzeichnet ist:
a) Trocknen und Glühen der Keramikfasern eines Keramikfaserwerkstoffs in Form von Gelegen oder Gewebe,
b) Infiltrieren des Keramikwerkstoffs mit Silikaten,
c) Aufbringen von anorganischem Hochtemperaturlack aus Silikatbinder und Aluminiumpulver als Aluminiumfüllstoff auf die Bauteiloberfläche und auf die Keramikfasern,
d) Trocknen und Einbrennen des Hochtemperaturlackes,
e) Versiegeln der Oberfläche der Schutzschicht mittels Silikaten.

7. Verfahren nach Anspruch 6, dadurch gekennzeichnet, daß zunächst mehrfach hintereinander Hochtemperaturlack und mit Silikat infiltrierter Keramikfaserwerkstoff auf das Bauteil aus Metall aufgebracht und eingebrannt werden und anschließend die Oberfläche der Schutzschicht versiegelt wird.

## Claims

1. A metal article protected against burning titanium by means of ceramic fibres and a matrix material, characterised in that the ceramic fibres are arranged as a woven fabric or cloth and consist of SiO₂, Al₂O₃, ZrO₂ or mixtures thereof and in that the matrix material has silicates with embedded aluminium powder.

2. An article as claimed in Claim 1, characterised in that the matrix material is an inorganic high-temperature paint.

3. An article as claimed in Claim 1 or Claim 2, characterised in that the protection has a density between 0.8 and 2.0 g/cm³.

4. An article as claimed in one of Claims 1 to 3, characterised in that the protection has a thickness of between 0.5 and 20 mm, preferably 1 to 10 mm.

5. An article as claimed in one of Claims 1 to 4, characterised in that the surface of the protection is sealed in a gastight manner.

6. A method of making an article protected against burning titanium as claimed in one of Claims 1 to 5, characterised by the following process steps:
(a) drying and baking of the ceramic fibres of a ceramic fibre material in the form of woven fabric or cloth,
(b) infiltration of the ceramic material with silicates,
(c) application of inorganic high-temperature paint comprising silicate binder and aluminium powder as aluminium filler to the surface of the article and to the ceramic fibres,
(d) drying and stoving of the high-temperature paint,
(e) sealing of the surface of the protective layer with silicates.

7. A method as claimed in Claim 6, characterised in that, initially repeatedly in succession, high-temperature paint and ceramic fibre material infiltrated with silicate are applied to the metal article and stoved, and subsequently the surface of the protective layer is sealed.

## Revendications

1. Pièce métallique munie d'un moyen de protection contre le titane incandescent, en fibres céramiques et en une matière formant matrice, pièce caractérisée en ce que les fibres céramiques sont des nappes ou tissus se composant de SiO₂, Al₂O₃, ZrO₂ ou de mélanges et la matière de la matrice comporte des silicates auxquels est intégrée de la poudre d'aluminium.

2. Pièce selon la revendication 1, caractérisée en ce que la matière de la matrice est un vernis minéral très réfractaire.

3. Pièce selon la revendication 1 ou 2, caractérisée en ce que le moyen de protection a une densité comprise entre 0,8 et 2,0 g/cm³.

4. Pièce selon l'une des revendications 1 à 3, caractérisée en ce que le moyen de protection présente une épaisseur comprise entre 0,5 et 20 mm et de préférence de 1 à 10 mm.

5. Pièce selon l'une des revendications 1 à 4, caractérisée en ce que la surface du moyen de protection est scellée de façon étanche aux gaz.

6. Procédé de fabrication d'une pièce protégée contre le titane incandescent selon l'une des revendications 1 à 5, caractérisé par les étapes de procédé suivantes :
a) séchage et recuit des fibres en céramique d'une matière de fibres céramiques sous la forme de nappes ou de tissus,
b) infiltration de la matière céramique avec des silicates,
c) application d'un vernis minéral très réfractaire en liants de silicates et poudre d'aluminium comme charge d'aluminium à la surface de la pièce ou sur les fibres céramiques,
d) séchage et cuisson du vernis très réfractaire,
e) scellement de la surface de la couche protectrice à l'aide de silicates.

7. Procédé selon la revendication 6, caractérisé en ce que l'on applique tout d'abord plusieurs fois du vernis très réfractaire et on applique la matière céramique dans laquelle est infiltré le silicate, sur la pièce en métal et on cuit puis on scelle la surface de la couche protectrice.
